# EUROPÄISCHE PATENTSCHRIFT

(11) **EP 3 022 534 B1**
(45) Veröffentlichungstag und Bekanntmachung des Hinweises auf die Patenterteilung: **19.12.2018**
(21) Anmeldenummer: 14747540.4
(22) Anmeldetag: 17.07.2014
(51) Int. Cl.: G01F 23/00, G01F 23/296

(54) **SENSOREINRICHTUNG**
SENSOR DEVICE
DISPOSITIF CAPTEUR

(30) Priorität: 19.07.2013 DE 102013107707
(43) Veröffentlichungstag der Anmeldung: 25.05.2016
(73) Patentinhaber: Pepperl + Fuchs GmbH, 68307 Mannheim (DE)
(72) Erfinder: LUBER, Ernst, 92259 Neukirchen (DE)
(74) Vertreter: Hamel, Armin
(86) Internationale Anmeldenummer: PCT/EP2014/065404
(87) Internationale Veröffentlichungsnummer: WO 2015/007850

(56) Entgegenhaltungen:
- EP-A1- 2 124 018
- EP-A1- 2 180 299
- EP-A1- 2 253 942
- US-A1- 2007 209 434

## Beschreibung

Die Erfindung betrifft eine Sensoreinrichtung nach dem Oberbegriff des Patentanspruchs 1 sowie ein Verfahren nach den Merkmalen des Patentanspruchs 8.
Eine Sensoreinrichtung enthält einen Sensor, mit dem bestimmte physikalische, chemische Eigenschaften oder aber auch eine stoffliche Beschaffenheit einer Umgebung erfasst werden können. Eine solche Sensoreinrichtung kann in Form eines autarken Systems eingesetzt werden. Bei diesen autarken Systemen besteht das Hauptproblem in der Energieversorgung über einen längeren Zeitraum. Um eine möglichst lange Lebensdauer dieses autarken Systems zu erreichen, ist ein intelligentes Powermanagement nötig, mit dem der Stromverbrauch reduziert wird.

Ein solches autarkes System ist aus DE 10 2007 038 756 A1 bekannt. Dieses autarke System besitzt ein Sensorsystem, das derart ausgestaltet ist, dass es zwischen einem aktiven Betriebszustand und einem Ruhe-Betriebszustand wechseln kann, wobei das Sensorsystem im Ruhe-Betriebszustand weniger Energie benötigt als im aktiven Betriebszustand. Ferner umfasst das autarke System eine Aufweckeinrichtung, die derart ausgestaltet ist, dass sie auf ein Aufwecksignal hin, dass das autarke System erreicht, das Sensorsystem veranlasst, in den aktiven Betriebszustand zu wechseln, wobei das Aufwecksignal ein akustisches und/oder optisches Signal ist.

Ein weiteres System zur Füllstandsmessung mittels eines Ultraschallsensors ist in US 2007/261487 A1 beschrieben.
Überdies ist aus der US 2007/0209434 A1 eine Ultraschallüberwachung zur Messung einer Füllstandshöhe einer Flüssigkeit, z.B. Öl oder Wasser, in einem Sammelbehälter bekannt. Bei dieser Ultraschallüberwachung ist eine Haupt-CPU zwischen einen Ultraschallwandler und einen Funkempfänger geschaltet, wobei das Funksende- und Empfangsgerät eine Antenne hat, von welcher aus Füllstandsdaten, die von der CPU berechnet wurden, kabellos übertragen werden können. Dieses Funksende- und Empfangsgerät ist in der Lage, die CPU aus einem Schlafmodus aufzuwecken.

Aufgabe der vorliegenden Erfindung ist es deshalb, die Energieversorgung der Sensoreinrichtung zu optimieren.
Diese Aufgabe wird nach den Merkmalen des Patentanspruchs 1 sowie nach den Merkmalen des Patentanspruchs 8 gelöst.
Die Erfindung betrifft eine Sensoreinrichtung ausgeführt zur Füllstanderfassung bei einem Sammelbehälter, wobei die Sensoreinrichtung vorzugsweise als Ultraschallsensor ausgebildet ist. Die Sensoreinrichtung ist derart ausgestaltet, dass die Sensoreinrichtung zwischen einem aktiven Betriebszustand und einem Stromsparmodus wechseln kann, wobei die Sensoreinrichtung im Stromsparmodus weniger Energie als im aktiven Betriebszustand benötigt. Dazu weist die Sensoreinrichtung eine Aktivierungseinrichtung auf, die derart ausgestaltet ist, dass die Aktivierungseinrichtung aufgrund eines äußeren Signals, das die Aktivierungseinrichtung erreicht, einen Ultraschallwandler veranlasst, in einen aktiven Betriebszustand zu wechseln, wobei der Ultraschallwandler im Betriebszustand mindestens eine Füllstandsmessung durchführt.
Die Sensoreinrichtung ist vor den Messungen hinsichtlich definierter Randbedingungen für einen bestimmten Sammelbehältertyp konfiguriert worden, wobei die Sensoreinrichtung einen Steuereingang aufweist, der derart ausgestaltet ist, dass im Stromsparmodus von der Aktivierungseinrichtung kommende Signale von dem Steuereingang erfassbar sind. Die Konfiguration erfolgt abhängig von den für die Messung erforderlichen Triggerbedingungen in Abhängigkeit von der Temperatur oder der Luftfeuchtigkeit, welche von den Randbedingungen für den bestimmten Behältertyp umfasst werden. Zusätzlich wird für die Sensoreinrichtung für einen bestimmten Sammelbehältertyp eine Bezugsgröße für den Füllstand ermittelt. Durch die Festsetzung der Triggerbedingungen sowie die Grenzwerte für den Füllstand für einen bestimmten Sammelbehältertyp werden somit die erforderlichen Randbedingungen definiert.
Dadurch, dass die Sensoreinrichtung vor den Messungen hinsichtlich bestimmter Randbedingungen für einen bestimmten Sammelbehältertyp, d.h. für eine bestimmte Applikation, konfiguriert worden ist, kann die Sensoreinrichtung und somit der Ultraschallwandler nicht ohne vorher von der Aktivierungseinrichtung angesprochen worden zu sein, in den aktiven Betriebszustand überführt werden, womit verhindert wird, dass der Ultraschallwandler unnötige Messungen durchführt.
Befindet sich die Sensoreinrichtung und damit der Ultraschallwandler im Stromsparmodus, so ist eine Sendeempfangseinheit deaktiviert und alle Triggereingänge, wie beispielsweise der in der Sensoreinrichtung angeordnete Steuereingang, aktiviert. Von Vorteil ist, dass sich die im Stromsparmodus befindliche Sensoreinrichtung durch die Erfassung von Umweltsignalen gezielt in den aktiven Betriebszustand bringen lässt.
Die Sensoreinrichtung wird durch eine Energiegewinnungseinrichtung für Energie-Harvesting mit Energie versorgt, mit der es möglich ist, aus der Umgebung Energie zu gewinnen. Damit die gewonnene Energie auch gespeichert werden kann, wenn die Sensoreinrichtung die Energie nicht benötigt, besitzt die Sensoreinrichtung ein Speichersystem, mit dem die aus der Umgebung gewonnene Energie speicherbar ist.
Soll die Sensoreinrichtung hingegen durch äußere Einflüsse in den aktiven Betriebszustand überführt werden, so weist die Aktivierungseinrichtung einen Lichtsensor, einen elektrischen Kontakt, einen Bewegungssensor, einen Temperatursensor oder ein Schwingungsmessgerät auf.

Die Sensoreinrichtung weist auch einen Spannungsregler mit einer Energieüberwachungseinheit auf, wobei die Energieüberwachungseinheit dazu ausgeführt ist, zu überwachen, ob genügend Energie vorhanden ist, um die Sensoreinrichtung im Stromsparmodus zu halten. Damit wird gewährleistet, dass die Sensoreinrichtung immer ausreichend mit Strom versorgt wird, wobei diese Information an eine übergeordnete Steuerung, mit einer lokalen Meldevorrichtung oder einem Fernwirkmodul übertragen wird. Beispielsweise kann über die übergeordnete Steuerung, wenn sie ein Fernwirkmodul (GSM, WLAN) ist, ein Entsorger über den Füllstand des Sammelbehälters oder über die Betriebsbereitschaft des Ultraschallsensors informiert werden. Dadurch wird verhindert, dass sich die Sensoreinrichtung abschaltet, wenn keine ausreichende Energie für den aktiven Betriebsmodus zur Verfügung steht. Die Betriebsbereitschaft der Sensoreinrichtung kann dabei mittels eines Watchdogs oder einer Echtzeituhr zyklisch, d.h. in definierten Zeitabständen, überwacht werden. Möglich ist dabei auch, dass die übergeordnete Steuerung Bestandteil der Sensoreinrichtung ist.
Damit keine Messdaten verloren gehen, wenn der Ultraschallsensor von dem Betriebszustand in den Stromsparmodus wechselt, ist ein nichtflüchtiger Datenspeicher vorgesehen, mit dem die erfassten Messdaten abgespeichert werden können. Als nichtflüchtiger Datenspeicher kann beispielsweise ein FRAM (Ferroelectric Random Access Memory) eingesetzt werden. Bei diesem Datenspeicher handelt es sich um einen energie- und geschwindigkeitsoptimierten Speicherbaustein, der keine Ladungspumpe benötigt, weil dieser Datenspeicher Kristalle mit ferroelektrischen Eigenschaften besitzt.
Damit die Sensoreinrichtung in definierten Zeitabständen in den aktiven Betriebszustand überführbar ist, kann die Aktivierungseinrichtung ein Zeiterfassungssystem aufweisen. Bei diesem Zeiterfassungssystem kann es sich um eine Funkuhr handeln.

Die Sensoreinrichtung umfasst eine Steuereinheit, die mit dem Steuereingang verbunden ist, wobei die Steuereinheit in den aktiven Betriebszustand gebracht wird, nachdem der Steuereingang ein Signal von der Aktivierungseinrichtung erhalten hat.

Soll die Sensoreinrichtung durch äußere Einflüsse in den aktiven Betriebszustand überführt werden, so kann ein externer serieller Bus vorgesehen sein, der mit der Aktivierungseinrichtung in Kontakt steht. Die Aktivierungseinrichtung umfasst dabei einen Sensor, mit dem die äußeren Einflüsse erfasst werden können. Bei diesem Sensor kann es sich beispielsweise um einen Lichtsensor, ein Schwingungsmessgerät, einen elektrischen Kontakt, einen Beschleunigungssensor oder einen Temperatursensor handeln.

Der Ultraschallsensor weist vorteilhafterweise eine Low-Energy-Schnittstelle zur drahtlosen Datenübermittlung auf. Die erfassten Messdaten können über die Low-Energy-Schnittstelle zusammen mit einem ermittelten Energiestatus der Sensoreinrichtung an eine übergeordnete Steuerung übertragen werden. Die Steuerung umfasst dabei eine Anzeige, über die einem Nutzer die erfassten Messdaten angezeigt werden können. Auch der Energiestatus kann durch die Anzeige angezeigt werden, womit ein Nutzer zu jedem Zeitpunkt davon in Kenntnis gesetzt wird, wie viel Energie die Sensoreinrichtung im Stromsparmodus oder aber auch im Betriebszustand verbraucht.

Die Steuereinheit der Sensoreinrichtung ist vorteilhafterweise mit dem Ultraschallwandler verbunden, wobei der Ultraschallwandler über die Steuereinheit in den aktiven Betriebszustand überführbar ist.

Die Erfindung betrifft auch ein Verfahren zum Überführen einer im Ruhezustand befindlichen Sensoreinrichtung in einen aktiven Betriebszustand gemäß dem unabhängigen Patentanspruch 8.

Ein Ausführungsbeispiel wird im Folgenden anhand von Figuren erläutert und näher beschrieben. Es zeigen:
Figur 1 eine Sensoreinrichtung zur Füllstanderfassung bei einem Sammelbehälter und
Figur 2 einen schematischen Aufbau der in Figur 1 gezeigten Sensoreinrichtung.

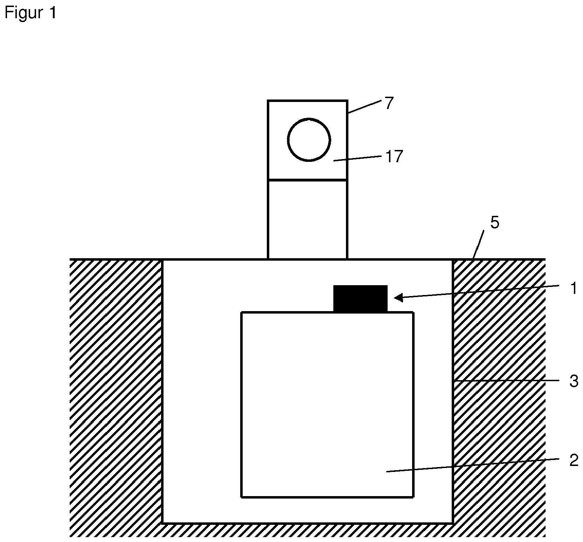

In Figur 1 ist eine Sensoreinrichtung 1 zur Füllstanderfassung bei einem Sammelbehälter 2 dargestellt. Bei diesem Sammelbehälter 2 kann es sich - wie in Figur 1 dargestellt - um einen Unterflurbehälter 2 handeln. Dieser Unterflurbehälter 2 ist in einer Kammer 3 untergebracht, die Teil eines Gebäudes (nicht dargestellt) sein kann. Die Kammer 3, in der Unterflurbehälter 2 untergebracht ist, liegt unterhalb eines Bodens 5. Oberhalb des Bodens 5 ist ein Einfüllschacht 7 mit einer Einfüllklappe 17 zu erkennen. Über den Einfüllschacht 7 ist es möglich, den Unterflurbehälter 2 zu beschicken. Handelt es sich bei dem Unterflurbehälter 2 beispielsweise um einen Müllbehälter, so kann dieser Unterflurbehälter 2 über den Einfüllschacht 7 mit Müll beschickt werden.

Mit der Sensoreinrichtung 1 kann der Füllstand des Unterflurbehälters 2 gemessen werden, wobei die Sensoreinrichtung 1 in diesem Ausführungsbeispiel als Ultraschallsensor ausgebildet ist. Dazu ist die Sensoreinrichtung 1 derart ausgebildet, dass diese zwischen einem aktiven Betriebszustand und einem Stromsparmodus wechseln kann. Ist die Einfüllklappe 17 des Einfüllschachts 7 geschlossen, so befindet sich die Sensoreinrichtung 1 im Stromsparmodus. In diesem Stromsparmodus verbraucht die Sensoreinrichtung 1 weniger Energie als im aktiven Betriebszustand. Wird jedoch die Einfüllklappe 17 geöffnet, so beginnt die Sensoreinrichtung 1 die Füllhöhe des Unterflurbehälters 2 zu messen. Bei diesem Verfahren zum Erfassen der Füllhöhe in dem Unterflurbehälter 2 sendet ein in der Sensoreinrichtung 1 angeordneter Ultraschallwandler (in Figur 1 nicht dargestellt) Signale aus, die von dem Inhalt bzw. von dem Boden des Unterflurbehälters 2 reflektiert werden. Diese Echosignale werden in der Sensoreinrichtung 1 verarbeitet, so dass der Füllstand in dem Unterflurbehälter 2 ermittelt werden kann. Da ein solches Verfahren zur Füllstanderfassung an sich bekannt ist, und beispielsweise in EP 2 148 219 B1 offenbart ist, wird auf eine detaillierte Beschreibung dieses Verfahrens verzichtet. Damit jedoch die Sensoreinrichtung 1 die Messungen durchführen kann, muss diese in den aktiven Betriebszustand überführt werden. Dazu ist eine Aktivierungseinrichtung (nicht dargestellt) vorgesehen, die - bedingt durch beispielsweise äußere Einflüsse - die Sensoreinrichtung 1 und somit auch den Ultraschallwandler in den aktiven Betriebszustand überführt. Die Aktivierungseinrichtung weist dazu einen Lichtsensor, einen Bewegungssensor, einen Temperatursensor, einen elektrischen Kontakt oder ein Schwingungsmessgerät auf.
Vorteilhafterweise ist die Aktivierungseinrichtung an der Einfüllklappe 17 des Einfüllschachts 7 oder in dem Einfüllschacht 7 angebracht. Wird die Einfüllklappe 17 geöffnet, so wird der elektrische Kontakt unterbrochen, was die Aktivierungseinrichtung registriert und aufgrund dessen ein Signal an die Sensoreinrichtung 1 sendet, was die Sensoreinrichtung 1 veranlasst, in den aktiven Betriebszustand überzugehen. Wird die Einfüllklappe 17 wieder geschlossen, so wird der elektrische Kontakt wiederhergestellt, was die Aktivierungseinrichtung registriert und die Sensoreinrichtung 1 und damit auch den Ultraschallwandler veranlasst, wieder in den Stromsparmodus zurückzukehren.
Die Aktivierung der Sensoreinrichtung 1 erfolgt somit über eine mit der Aktivierungseinrichtung in Verbindung stehende Auslösevorrichtung. Diese Auslösevorrichtung kann - wie dem vorliegenden Ausführungsbeispiel beschrieben - die Einfüllklappe 17 sein, mit der ein elektrischer Kontakt geschlossen oder ein Schwingungsmessgerät oder ein Lichtsensor angeregt wird. Die Sensoreinrichtung 1 kann bei der Inbetriebnahme mit unterschiedlichen Triggerbedingungen konfiguriert werden, welche von den Randbedingungen für einen bestimmten Sammelbehältertyp umfasst werden und welche sich auf die Temperatur und/oder die Luftfeuchtigkeit beziehen.

Weist die Aktivierungseinrichtung beispielsweise ein Schwingungsmessgerät sowie einen Lichtsensor auf, so sendet diese Aktivierungseinrichtung dann ein Signal an die Sensoreinrichtung 1, wenn die Aktivierungseinrichtung durch Licht und/oder durch eine Schwingung angeregt wurde. Somit erfolgt ein Wechsel vom Stromsparmodus in den aktiven Betriebsmodus durch eine Und/Oder-Verknüpfung von zwei Signalen, wobei es sich bei diesen zwei Signalen um Licht und Schwingung handelt.

Obwohl in der Figur 1 nicht gezeigt, so kann vorteilhafterweise an der Kammer 3 oder am Einfüllschacht 7 eine Anzeige vorgesehen sein, über die angezeigt werden kann, ob der Unterflurbehälter 2 voll ist und ob dieser geleert werden muss. Dadurch kann auch außerhalb der Kammer 3 und ohne Öffnen des Unterflurbehälters 2 erkannt werden, ob der Unterflurbehälter 2 geleert werden muss oder nicht.

Gerade bei Unterflurbehältern, das heißt bei sehr großen Sammelbehältern, erweist sich eine solche Sensoreinrichtung mit angeschlossener Aktivierungseinrichtung als vorteilhaft, weil diese großen Sammelbehälter nur unter sehr großem Aufwand, zum Beispiel mittels eines mobilen Krans, bewegt und entleert werden können.

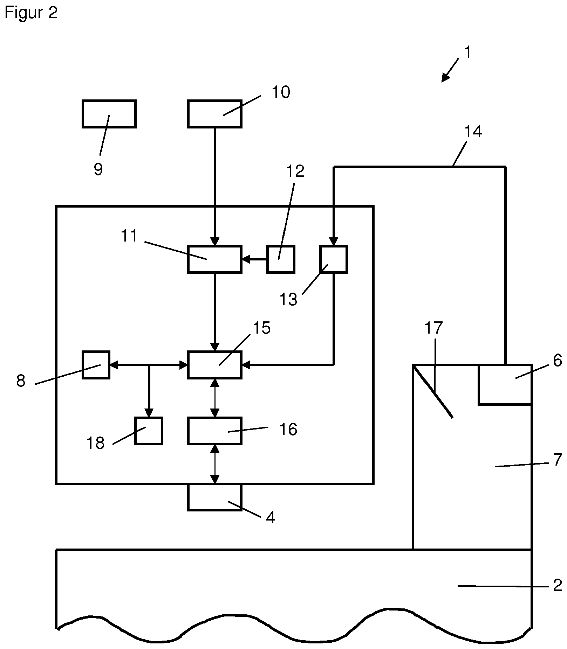

In Figur 2 ist ein schematischer Aufbau der in Figur 1 gezeigten Sensoreinrichtung 1 dargestellt.

Damit die Sensoreinrichtung 1 zwischen einem aktiven Betriebszustand und einem Stromsparmodus wechseln kann, weist diese Sensoreinrichtung 1 eine Steuereinheit 15 und eine Sendeempfangseinheit 16 auf, wobei die Steuereinheit 15 und die Sendeempfangseinheit 16 im Stromsparmodus ebenfalls weniger Energie benötigen als im aktiven Betriebszustand. Damit die Sensoreinrichtung 1 in diesem Stromsparmodus weiterhin Signale empfangen kann, weist die Sensoreinrichtung 1 einen Steuereingang 13 auf. Der Steuereingang 13 empfängt dabei Signale der Aktivierungseinrichtung 6, die von der Aktivierungseinrichtung 6 an den Steuereingang 13 gesendet werden, nachdem die Aktivierungseinrichtung 6 durch äußere Umweltsignale (zum Beispiel durch Licht, Schwingungen, Auslösen eines elektrischen Kontakts) angesprochen wurde. Nachdem der Steuereingang 13 von der Aktivierungseinrichtung 6 ein Signal erhalten hat, spricht der Steuereingang 13 gezielt die Steuereinheit 15 an. Dadurch wird die Steuereinheit 15 in den aktiven Betriebszustand überführt. Befindet sich die Steuereinheit 15 im aktiven Betriebszustand, so wird der Ultraschallwandler 4 der durch die Steuereinheit 15 veranlasst, zumindest eine Messung durchzuführen. Dabei ist die Sensoreinrichtung 1 vor den Messungen hinsichtlich bestimmter Randbedingungen für einen bestimmten Sammelbehältertyp, d. h. für eine bestimmte Applikation, konfiguriert worden.

Es versteht sich, dass mit der Sensoreinrichtung 1 auch die Temperatur, die Lichtstärke oder die Luftfeuchtigkeit gemessen werden kann, wenn die Sensoreinrichtung 1 mit einem entsprechenden Sensor ausgestattet ist.

Die Aktivierungseinrichtung 6 ist in dem Einfüllschacht 7 angeordnet, wobei über diesen Einfüllschacht 7 der Unterflurbehälters 2 mit Material (nicht dargestellt), z. B. Müll, beschickt werden kann. Der Einfüllschacht 7 weist dazu die Einfüllklappe 17 auf, die zuvor geöffnet werden muss, soll der Unterflurbehälter 2 mit Material gefüllt werden.

Diese Aktivierungseinrichtung 6 ist derart ausgestaltet, dass die Aktivierungseinrichtung 6 aufgrund eines äußeren Signals, die Sensoreinrichtung 1 und damit auch den Ultraschallwandler 4 veranlasst, in den aktiven Betriebszustand zu wechseln, wobei der Ultraschallwandler 4 in dem aktiven Betriebszustand mindestens eine Messung durchführt. Die Aktivierung der Aktivierungseinrichtung 6 erfolgt über eine mit der Aktivierungseinrichtung 6 in Verbindung stehende Auslösevorrichtung. In Figur 2 ist diese Auslösevorrichtung die Einfüllklappe 17, mit der ein elektrischer Kontakt geschlossen, ein Lichtsensor oder ein Schwingungsmessgerät angeregt wird. Die Sensoreinrichtung 1 kann bei der Inbetriebnahme mit unterschiedlichen externen Triggerbedingungen konfiguriert werden. So kann zum Beispiel ein Wechsel vom Stromsparmodus in den aktiven Betriebsmodus durch eine Und/Oder-Verknüpfung von zwei Signalen erfolgen. Weist die Aktivierungseinrichtung 6 beispielsweise ein Schwingungsmessgerät sowie einen Lichtsensor auf, so sendet diese Aktivierungseinrichtung 6 dann ein Signal an die Sensoreinrichtung 1, wenn die Aktivierungseinrichtung 6 durch Licht und/oder durch eine Schwingung angeregt wurde. Somit erfolgt bei der Sensoreinrichtung 1 ein Wechsel vom Stromsparmodus in den aktiven Betriebsmodus durch die Und/Oder-Verknüpfung von zwei Signalen, wobei es sich bei diesen zwei Signalen um Licht und Schwingung handelt.
Wie bereits erläutert, wird die Sensoreinrichtung 1 vor der Inbetriebnahme applikationsspezifisch konfiguriert, um zu gewährleisten, dass der Ultraschallwandler 4 der Sensoreinrichtung 1 nicht ohne von der Aktivierungseinrichtung 6 in den aktiven Betriebszustand überführt zu werden, in den aktiven Betriebszustand gerät und so unnötigerweise Messungen durchführt. Diese Konfiguration erfolgt abhängig von den erforderlichen Triggerbedingungen in Abhängigkeit von der Temperatur oder der Luftfeuchtigkeit für die Messung. Zusätzlich wird dabei für die Sensoreinrichtung 1 eine Bezugsgröße für den Füllstand ermittelt. Dazu werden bei der Inbetriebnahme der Sensoreinrichtung 1 die Grenzwerte für den Füllstand definiert, wobei als unterer Grenzwert der minimale Füllstand (= Sammelbehälter ist leer) und als oberer Grenzwert der maximale Füllstand (= Sammelbehälter ist voll) eingegeben werden. Durch die Festsetzung von Triggerbedingungen sowie von Grenzwerten für den Füllstand für einen bestimmten Sammelbehältertyp werden somit Randbedingungen definiert, aufgrund derer die Sensoreinrichtung 1 konfiguriert wird.
Zu erkennen ist eine übergeordnete Steuerung 9, an die die von der Sensoreinrichtung 1 ermittelten und ausgewerteten Messdaten übermittelt werden. Die übergeordnete Steuerung 9 kann eine Auswerteeinheit aufweisen, mit der die übermittelten Messdaten weiter ausgewertet werden können. Damit einem Nutzer die Messdaten angezeigt werden können, kann an die übergeordnete Steuerung 9 eine nicht dargestellte Anzeige, beispielsweise ein Monitor, angeschlossen sein.

Zu erkennen ist auch eine in der Sensoreinrichtung 1 angeordnete Low-Energy-Schnittstelle 8 zur Datenübermittlung. Mittels dieser Low-Energie-Schnittstelle 8 zur Datenübermittlung werden die durch die Messung erfassten Messdaten ohne zeitliche Verzögerung an die übergeordnete Steuerung 9 übermittelt. Bei der Low-Energy-Schnittstelle 8 kann es sich um eine serielle Low-Energy-Schnittstelle 8 handeln, falls die übergeordnete Steuerung 9 über ein Festnetz mit der Sensoreinrichtung 1 verbunden ist. Wird das Signal beispielsweise über GMS oder WLAN an die übergeordnete Steuerung 9 übermittelt, so kann es sich bei der Low-Energy-Schnittstelle 8 um ein GMS-Modul oder ein WLAN-Modul handeln. Mit der Low-Energy-Schnittstelle 8 werden die zuvor in der Steuereinheit 15 ausgewerteten Messwerte an die übergeordnete Steuerung 9 übertragen.

Vorteilhaft bei dieser Anordnung bestehend aus übergeordneter Steuerung 9 und Low-Energy-Schnittstelle 8 ist, dass auf einen Zwischenspeicher verzichtet werden kann, in dem die Daten zwischengespeichert werden müssen. Dadurch wird der apparative Aufwand minimiert.

Es versteht sich, dass die übergeordnete Steuerung 9 auch Teil der Sensoreinrichtung 1 sein kann, was jedoch in diesem Ausführungsbeispiel nicht der Fall ist.

An der Sensoreinrichtung 1 ist eine Energiegewinnungseinrichtung 10 für Energie-Harvesting vorgesehen, mit der aus der Umgebung Energie, z. B. Licht oder Wärme, gewonnen wird. Die mit der Energiegewinnungseinrichtung 10 gewonnene Energie wird einem Spannungsregler 11 mit einer integrierten Spannungsüberwachungseinheit bereitgestellt. Mit der Spannungsüberwachungseinheit kann zu jedem Zeitpunkt kontrolliert werden, ob genügend Energie vorhanden ist, um die Sensoreinrichtung 1 im Stromsparmodus zu halten.

Damit die gewonnene Energie gespeichert werden kann, wenn die Sensoreinrichtung 1 die mittels der Energiegewinnungseinrichtung 10 gewonnenen Energie nicht benötigt, besitzt die Sensoreinrichtung 1 ein Speichersystem 12, mit dem die aus der Umgebung gewonnene Energie speicherbar ist. Dabei kann es sich bei diesem Speichersystem 12 um einen Dünnfilmenergiespeicher handeln, der sich durch eine hohe Energiedichte auszeichnet. Da das Gewinnen von Energie mittels "Energie-Harvesting" an sich bekannt ist, wird darauf verzichtet, dieses Energiegewinnungsverfahren im Detail zu beschreiben.

Die Überführung der Sensoreinrichtung 1 in den aktiven Betriebszustand erfolgt über die Aktivierungseinrichtung 6. Die Aktivierungseinrichtung 6 weist einen nicht gezeigten externen Sensor auf. Bei diesem externen Sensor kann es sich beispielsweise um einen Lichtsensor, einen Bewegungssensor, einen elektrischen Kontakt oder ein Schwingungsmessgerät handeln. Solche Sensoren sind an sich bekannt, weshalb auf den Aufbau sowie auf die Funktionsweise dieser Sensoren nicht weiter eingegangen wird.

Die Aktivierungseinrichtung 6 ist mit einem in der Sensoreinrichtung 1 angeordneten Steuereingang 13 für die Messungen über eine serielle Schnittstelle verbunden (vergleiche Pfeil 14). Der Steuereingang 13 steht mit einer Steuereinheit 15 in Verbindung. Vorzugsweise ist diese Steuereinheit 15 als Mikrocontroller ausgebildet. Die Steuereinheit 15 umfasst auch ein Zeiterfassungsmodul sowie ein Energiesparmodem. Mit dem Zeiterfassungssystem wird die Sensoreinrichtung 1 und somit auch der Ultraschallwandler 4 unabhängig von externen Sensorsignalen in einem konfigurierbaren Zeitraster in den aktiven Betriebszustand überführt, um zum Beispiel den Energiestatus in definierten Zeitabständen zu überprüfen.

Zwischen der Steuereinheit 15 und dem Ultraschallwandler 4 ist die Sendeempfangseinheit 16 vorgesehen.

Neben Aktivierungseinrichtungen, die den Ultraschallwandler 4 aufgrund von äußeren Einflüssen in den aktiven Betriebszustand überführen, gibt es auch solche Aktivierungseinrichtungen, die ein Zeiterfassungssystem besitzen, mittels dem der Ultraschallwandler 4 in definierten Zeitabständen in den aktiven Betriebszustand überführbar ist. In diesem Fall würde die Steuereinheit 15 allerdings kein Zeiterfassungssystem aufweisen müssen. Bei diesem Zeiterfassungssystem kann es sich zum Beispiel um eine Funkuhr handeln.

Aktivierungseinrichtungen, die den Ultraschallwandler 4 aufgrund von äußeren Einflüssen in den aktiven Betriebszustand überführen, können beispielsweise ein Lichtsensor, ein elektrischer Kontakt oder ein Schwingungsmessgerät sein. Handelt es sich bei der Aktivierungseinheit um einen Lichtsensor, so aktiviert dieser Lichtsensor den Ultraschallwandler 4, sobald Licht auf den Lichtsensor fällt, während ein Schwingungsmessgerät auf Vibrationen reagiert und den Ultraschallsensor 4 aktiviert, sobald das Schwingungsmessgerät Schwingungen ausgesetzt ist und diese registriert hat.

Die Steuereinheit 15 ist mit einem Spannungsregler 11 verbunden. Dieser Spannungsregler 11 übernimmt das Powermanagement, d.h. der Spannungsregler 11 überwacht die Energiegewinnungseinrichtung 10, regelt die Eingangsspannung in den Betriebsspannungsbereich und steuert die Aufladung des Energiespeichers 12. Mit einer in dem Spannungsregler 11 angeordneten Spannungsüberwachungseinheit ist die Eingangsspannung überwachbar, wobei die Spannungsüberwachungseinheit gegebenenfalls eine Warnung an eine externe Anzeige oder ein Fernwirksystem ausgibt, falls die Eingangsspannung der Energiegewinnungseinrichtung 10 im Stromsparmodus unterhalb eines kritischen Werts fällt.

Mit der Spannungsüberwachungseinheit des Spannungsreglers 11 kann somit zu jedem Zeitpunkt überprüft werden, ob genügend Energie vorhanden ist, um die Sensoreinrichtung 1 und somit auch den Ultraschallwandler 4 im Stromsparmodus zu halten. Damit ist gewährleistet, dass die Sensoreinrichtung 1 und damit auch der Ultraschallwandler 4 immer mit ausreichend Strom versorgt werden. Dadurch wird verhindert, dass sich die Sensoreinrichtung 1 im Stromsparmodus abschaltet, weil sie nicht mehr mit genügend Energie versorgt wird. Die Betriebsbereitschaft der Sensoreinrichtung 1 kann dabei mittels eines Watchdogs bzw. einer Echtzeituhr zyklisch, d.h. in definierten Zeitabständen, überwacht werden.

Um die Sensoreinrichtung 1 und somit auch den Ultraschallwandler 4 in den aktiven Betriebszustand zu überführen, kann ein externer serieller Bus vorgesehen sein. Unabhängig von externen Signalen kann über diese serielle Schnittstelle der Ultraschallwandler 4 in den aktiven Betriebszustand versetzt werden, zum Beispiel wenn das Fernwirkmodul mit der Sensorvorrichtung 1 über den seriellen Bus verbunden ist, kann ein Entsorgungsunternehmen gezielt den Füllstand des angewählten Unterflurbehälters 2 abfragen.

Damit keine Messdaten verloren gehen, wenn die Sensoreinrichtung 1 von dem aktiven Betriebszustand in den Stromsparmodus wechselt, ist es vorteilhaft, einen nichtflüchtigen Datenspeicher 18 vorzusehen, mit dem die erfassten Messdaten abgespeichert werden können. Als nichtflüchtiger Datenspeicher 18 kann beispielsweise ein FRAM (Ferroelectric Random Access Memory) eingesetzt werden. Bei diesem Datenspeicher 18 handelt es sich um einen energie- und geschwindigkeitsoptimierten Speicherbaustein, der keine Ladungspumpe benötigt, weil dieser Datenspeicher 18 Kristalle mit ferroelektrischen Eigenschaften besitzt. Solche Datenspeicher sind an sich bekannt, weshalb auf eine detaillierte Beschreibung verzichtet wird.

Im Folgenden wird kurz die Überführung der Sensoreinrichtung 1 und damit auch des Ultraschallwandler 4 von dem Stromsparmodus in den aktiven Betriebszustand beschrieben.
Wird der in der Aktivierungseinrichtung 6 integrierte externe Sensor angesprochen, so aktiviert die Aktivierungseinrichtung 6 über den Steuereingang 13 die Steuereinheit 15. Die Steuereinheit 15 spricht über die Sendeempfangseinheit 16 den Ultraschallwandler 4 an, der die Abstandsmessung in dem Unterflurbehälter 2 ausführt. Die Energie für die Messung regelt der Spannungsregler 11, wobei dieser Spannungsregler 11 die Energie von dem Energiespeicher 12 bzw. von der Energiegewinnungseinrichtung 10 erhält.

Bei der Messung sendet der Ultraschallwandler 4 ein Ultraschallsignal aus, das im Inneren des Unterflurbehälters 2 reflektiert wird. Das reflektierte Signal wird anschließend wieder vom Ultraschallwandler 4 empfangen. Aus der Zeit, die das vom Ultraschallwandler 4 ausgesandte Signal benötigt, um als Echo wieder zu dem Ultraschallwandler 4 zu gelangen, wird der Abstand vom Ultraschallwandler 4 zum Inneren des Unterflurbehälters 2 ermittelt. Das reflektierte Ultraschallsignal wird durch den Ultraschallwandler 4 in ein elektrisches Signal umgewandelt und an die Sendeempfangseinheit 16 weitergeleitet. Die Sendeempfangseinheit 16 sendet das Signal an die Steuereinheit 15, die aus dem Signal einen Abstandswert ermittelt wird. Diese Messung wird für jeden der zu vermessenden Erfassungsbereiche durchgeführt, so dass mehrere Abstandswerte erhalten werden. Die von der Steuereinheit 15 ermittelten Abstandswerte werden über die Low-Energy-Schnittstelle 8 an die übergeordnete Steuerung 9 gesendet, wo die ermittelten Abstandswerte weiter verarbeitet werden und in der schließlich der Füllstand des Unterflurbehälters 2 ermittelt wird.

Die ermittelten Abstandswerte werden dabei bevorzugt zusammen mit dem Energiestatus der Sensoreinrichtung 1 an die übergeordnete Steuerung 9 übertragen. Ist an der übergeordneten Steuerung 9 eine Anzeige (nicht dargestellt) angeschlossen, so können sowohl die Abstandswerte bzw. der Füllstand als auch der Energiestatus der Sensoreinrichtung 1 und damit auch des Ultraschallsensors 4 einem Nutzer angezeigt werden. Über die Anzeige kann somit ein Nutzer zu jedem Zeitpunkt davon in Kenntnis gesetzt werden, wie viel Energie die Sensoreinrichtung 1 und somit auch der Ultraschallwandler 4 im Betriebszustand bzw. im Stromsparmodus verbraucht.

### Bezugszeichenliste

- 1: Sensoreinrichtung
- 2: Sammelbehälter
- 3: Kammer
- 4: Ultraschallwandler
- 5: Boden
- 6: Aktivierungseinrichtung
- 7: Einfüllschacht
- 8: Low-Energy-Schnittstelle
- 9: Übergeordnete Steuerung
- 10: Energiegewinnungseinrichtung
- 11: Spannungsregler
- 12: Speichersystem
- 13: Steuereingang
- 14: Pfeil
- 15: Steuereinheit
- 16: Sendeempfangseinheit
- 17: Einfüllklappe
- 18: Nichtflüchtiger Speicher

## Patentansprüche

1. Sensoreinrichtung (1) ausgeführt zur Füllstanderfassung bei einem Sammelbehälter (2) mit
a. einem Ultraschallwandler (4),
b. einer Aktivierungseinrichtung (6), die derart ausgestaltet ist, dass die Aktivierungseinrichtung (6) aufgrund eines äußeren Signals, das die Aktivierungseinrichtung (6) erreicht, den Ultraschallwandler (4) veranlasst, in einen aktiven Betriebszustand zu wechseln, wobei der Ultraschallwandler (4) im Betriebszustand mindestens eine Messung durchführt,
wobei die Sensoreinrichtung (1) derart ausgestaltet ist, dass die Sensoreinrichtung (1) vor den Messungen hinsichtlich definierter Randbedingungen für einen bestimmten Sammelbehältertyp konfigurierbar ist, wobei die Randbedingungen für den bestimmten Behältertyp Grenzwerte für den Füllstand umfassen, und dass die Sensoreinrichtung (1) einen Steuereingang (13) aufweist, der derart ausgestaltet ist, dass von der Aktivierungseinrichtung (6) kommende Signale von dem Steuereingang (13) erfassbar sind, und wobei die Aktivierungseinrichtung (6) einen Lichtsensor, einen Bewegungssensor, einen elektrischen Kontakt oder ein Schwingungsmessgerät umfasst, wobei ein nichtflüchtiger Datenspeicher (18) vorgesehen ist, mit dem die erfassten Messdaten speicherbar sind, wenn der Ultraschallwandler (4) von dem aktiven Betriebszustand in den Stromsparmodus wechselt, so dass keine Messdaten verloren gehen, wenn der Ultraschallwandler (4) von dem aktiven Betriebszustand in den Stromsparmodus wechselt,
**dadurch gekennzeichnet, dass** die Randbedingungen für den bestimmten Behältertyp Triggerbedingungen umfassen und wobei sich die Triggerbedingungen auf die Temperatur und/oder die Luftfeuchtigkeit beziehen, wobei die Sensoreinrichtung einen Spannungsregler (11) mit einer Energieüberwachungseinheit umfasst, wobei die Energieüberwachungseinheit dazu ausgeführt ist, zu überwachen, ob in der Sensoreinrichtung (1) genügend Energie vorhanden ist, um die Sensoreinrichtung in einem Stromsparmodus zu halten,wobei die Sensoreinrichtung eine Energiegewinnungseinrichtung (10) für Energie-Harvesting umfasst, mit der aus der Umgebung Energie gewonnen wird, wobei die Sensoreinrichtung (1) ein Speichersystem (12) umfasst, mit dem die durch Energie-Harvesting gewonnene Energie speicherbar ist, wobei die gewonnene Energie dem Spannungsregler (11) bereitgestellt wird.

2. Sensoreinrichtung nach Patentanspruch 1, **dadurch gekennzeichnet, dass** die Aktivierungseinrichtung (6) ein Zeiterfassungssystem ist, mit dem der Ultraschallwandler (4) in definierten Zeitabständen in den aktiven Betriebszustand überführbar ist, wobei das Zeiterfassungssystem eine Funkuhr oder eine Echtzeituhr ist.

3. Sensoreinrichtung nach Patentanspruch 1, **dadurch gekennzeichnet, dass** der Steuereingang (13) mit einer Steuereinheit (15) verbunden ist, wobei die Steuereinheit (15) in den aktiven Betriebszustand bringbar ist, nachdem der Steuereingang (13) ein Signal von der Aktivierungseinrichtung (6) erhalten hat.

4. Sensoreinrichtung nach Patentanspruch 1, **dadurch gekennzeichnet, dass** ein Watchdog vorgesehen ist, mit dem die Betriebsbereitschaft des Ultraschallwandlers (4) zyklisch überwachbar ist.

5. Sensoreinrichtung nach Patentanspruch 1, **dadurch gekennzeichnet, dass** ein externer serieller Bus vorgesehen ist, mit dem der Ultraschallwandler (4) in den aktiven Betriebszustand überführbar ist.

6. Sensoreinrichtung nach Patentanspruch 1, **dadurch gekennzeichnet, dass** mittels einer Low-Energy-Schnittstelle (8) die erfassten Messdaten zusammen mit dem Energiestatus des Ultraschallwandlers (4) an eine übergeordnete Steuerung (9) übertragbar sind.

7. Sensoreinrichtung nach Patentanspruch 4, **dadurch gekennzeichnet, dass** die Steuereinheit (15) über eine Sendeempfangseinheit (16) mit dem Ultraschallwandler (4) verbunden ist, wobei der Ultraschallwandler (4) über die Steuereinheit (15) in den aktiven Betriebszustand überführbar ist.

8. Verfahren zum Überführen einer im Ruhezustand befindlichen Sensoreinrichtung (1) nach einem der Patentansprüche 1-7 in einen aktiven Betriebszustand, wobei die Sensoreinrichtung (1) im aktiven Betriebszustand mehrere Messungen durchführt, enthaltend folgende Schritte:
a) es wird mit einer Energieüberwachungseinheit überwacht, ob in der Sensoreinrichtung (1) genügend Energie vorhanden ist, um die Sensoreinrichtung (1) in einem Stromsparmodus zu halten;
b) es wird eine als ein Lichtsensor, ein Bewegungssensor, ein elektrischer Kontakt oder ein Schwingungsmessgerät ausgebildete Aktivierungseinrichtung (6) durch eine Triggerbedingung für einen bestimmten Sammelbehältertyp angesprochen, wobei sich die Triggerbedingung auf die Temperatur und/oder die Luftfeuchtigkeit bezieht;
c) die Aktivierungseinrichtung (6) sendet ein Signal an einen Steuereingang (13) der Sensoreinrichtung (1);
d) es wird in der Sensoreinrichtung (1) eine Steuereinheit (15) aktiviert;
e) die Steuereinheit (15) spricht einen Ultraschallwandler (4) an, der für einen bestimmten Erfassungsbereich ein Ultraschallsignal aussendet, das in einem Inneren eines Sammelbehälters (2) reflektiert wird, wobei das reflektierte Signal wieder vom Ultraschallwandler (4) empfangen wird;
f) in dem Ultraschallwandler (4) wird das Signal in ein elektrisches Signal umgewandelt und an die Steuereinheit (15) weitergeleitet;
g) in der Steuereinheit (15) wird aus dem elektrischen Signal für den Erfassungsbereich ein Abstandswert ermittelt;
h) der ermittelte Abstandswert wird an eine übergeordnete Steuerung (9) gesendet;
i)für jeden der zu vermessenden Erfassungsbereiche werden die Schritte e) bis h) wiederholt;
j)die übergeordnete Steuerung (9) errechnet aus den ermittelten Abstandswerten für die Erfassungsbereiche den Füllstand des Sammelbehälters (2).

## Claims

1. Sensor device (1) realized for registering a fill level in a collecting tank (2) with:
a) an ultrasonic transducer (4),
b) an activation system (6) developed such that the activation system (6) in response to an external signal that reaches the activation system (6) causes the ultrasonic transducer (4) to transition to active operating state, wherein the ultrasonic transducer (4) in the operating state carries out at least one measurement,
wherein the sensor devices (1) is developed such that before the measurements the sensor device (1) is configurable with respect to defined boundary conditions for a specific collecting tank type, wherein the boundary conditions for the specific tank type comprise limit values for the fill level, and that the sensor device (1) comprises a control input (13) developed such that signals from the activation system (6) are capturable by the control input (13), and wherein the activation system (6) comprises a light sensor, a motion sensor, an electrical contact or a vibrometer, wherein a nonvolatile data store (18) is provided with which the acquired measurement data are storable when the ultrasonic transducer (4) transitions from active operating state to power-save mode such that no measurement data are lost when the ultrasonic transducer (4) transitions from active operating state to power-save mode,
**characterized in that** the boundary conditions for the specific tank type comprise trigger conditions and wherein the trigger conditions refer to temperature and/or humidity, wherein the sensor device (1) comprises a voltage regulator (11) with a power monitoring unit, wherein the power monitoring unit is realized to monitor whether or not in the sensor device (1) sufficient power is available to maintain the sensor device (1) in power-save mode, wherein the sensor device (1) comprises an energy extraction system (10) for energy harvesting, with which from external sources energy is harvested, wherein the sensor device (1) comprises a storage system (12) with which the energy obtained through energy harvesting is storable, wherein the harvested energy is supplied to the voltage regulator (11).

2. Sensor device as in Patent Claim 1, **characterized in that** the activation system (6) is a time acquisition system with which at defined time intervals the ultrasonic transducer (4) can be transitioned to active operating state, wherein the time acquisition system is a radio controlled clock or a real time clock.

3. Sensor device as in Patent Claim 1, **characterized in that** the control input (13) is connected to a control unit (15), wherein the control unit (15) can be transitioned to active operating state after the control input (13) has received a signal from the activation system (6).

4. Sensor device as in Patent Claim 1, **characterized in that** a watchdog is provided with which the operational readiness of the ultrasonic transducer (4) can be cyclically monitored..

5. Sensor device as in Patent Claim 1, **characterized in that** an external serial bus is provided with which the ultrasonic transducer (4) can be transitioned to active operational state.

6. Sensor device as in Patent Claim 1, **characterized in that** by means of a low-energy interface (8) the acquired measurement data together with the energy status of the ultrasonic transducer (4) can be transmitted to a higher-level control (9).

7. Sensor device as in Patent Claim 4, **characterized in that** the control unit (15) is connected to the ultrasonic transducer (4) across a transceiver unit (16), wherein the ultrasonic transducer (4) can be transitioned to active operational mode across the control unit (15).

8. Method for transitioning a sensor device (1) as in one of Patent Claims 1 to 7 from resting state to active operational state, wherein the sensor device (1) in the active operational state carries out several measurements, comprising the following steps:
a) monitoring is carried out using an energy monitoring unit of whether or not sufficient energy is available in the sensor device (1) to maintain the sensor device (1) in power-save mode,
b) an activation system (6), developed as a light sensor, a motion sensor, an electrical contact or a vibrometer, is addressed through a trigger condition for a specific collecting tank type, wherein the trigger condition refers to temperature and/or humidity,
c) the activation system (6) sends a signal to a control input (13) of the sensor device (1),
d) in the sensor device (1) a control unit (15) is activated,
e) the control unit (15) addresses an ultrasonic transducer (4) which outputs for a specific acquisition region an ultrasonic signal that is reflected in an interior of a collecting tank (2), wherein the reflected signal is received again by the ultrasonic transducer (4),
f) in the ultrasonic transducer (4) the signal is converted to an electrical signal and forwarded to the control unit (15),
g) from the electrical signal for the acquisition region a distance value is determined in the control unit (15),
h) the determined distance value is sent to a higher-level control (9),
i) for each of the acquisition regions to be measured, steps e) to h) are repeated,
j) the higher-level control (9) computes the fill level of the collecting tank (2) from the determined distance values for the acquisition regions.

## Revendications

1. Dispositif capteur (1) conçu pour la détection de niveau de remplissage dans un réservoir collecteur (2), comprenant
a) un transducteur ultrasonique (4),
b) un dispositif d'actionnement (6) qui est conçu de telle sorte que le dispositif d'actionnement (6), en raison d'un signal externe qui atteint le dispositif d'actionnement (6), amène le transducteur ultrasonique (4) à basculer dans un état opérationnel actif, le transducteur ultrasonique (4) dans l'état opérationnel effectuant au moins une mesure,
le dispositif capteur (1) étant configuré de telle sorte que le dispositif capteur (1) peut être configuré avant les mesures pour un type de réservoir collecteur donné du point de vue des conditions aux limites, les conditions aux limites pour le type de réservoir collecteur donné comprenant des valeurs limites pour le niveau de remplissage,
et le dispositif capteur (1) possédant une entrée de commande (13) qui est configurée de telle sorte que les signaux en provenance du dispositif d'actionnement (6) peuvent être acquis par l'entrée de commande (13), et le dispositif d'actionnement (6) comprenant un capteur de lumière, un capteur de mouvement, un contact électrique ou un appareil de mesure des vibrations, une mémoire de données (18) non volatile étant présente, laquelle permet de mémoriser les données de mesure acquises lorsque le transducteur ultrasonique (4) bascule de l'état opérationnel actif dans l'état d'économie d'énergie, de sorte que les données de mesure ne sont pas perdues lorsque le transducteur ultrasonique (4) bascule de l'état opérationnel actif dans l'état d'économie d'énergie,
**caractérisé en ce que** les conditions aux limites pour le type de réservoir collecteur donné comprennent des conditions de déclenchement et les conditions de déclenchement se rapportant à la température et/ou l'humidité de l'air, le dispositif capteur comprenant un régulateur de tension (11) pourvu d'une unité de surveillance d'énergie, l'unité de surveillance d'énergie étant conçue pour surveiller si suffisamment d'énergie est présente dans le dispositif capteur (1) pour maintenir le dispositif capteur dans un état d'économie d'énergie, le dispositif capteur comprenant un dispositif de récupération d'énergie (10) pour la collecte d'énergie à l'aide duquel de l'énergie est recueillie depuis l'environnement, le dispositif capteur (1) comprenant un système accumulateur (12) qui permet d'accumuler l'énergie recueillie par la collecte d'énergie, l'énergie recueillie étant fournie au régulateur de tension (11).

2. Dispositif capteur selon la revendication 1, **caractérisé en ce que** le dispositif d'actionnement (6) est un système de mesure du temps avec lequel le transducteur ultrasonique (4) peut être amené dans l'état opérationnel actif à des intervalles de temps définis, le système de mesure du temps étant une horloge radiopilotée ou une horloge à temps réel.

3. Dispositif capteur selon la revendication 1, **caractérisé en ce que** l'entrée de commande (13) est reliée à une unité de commande (15), l'unité de commande (15) pouvant être amenée dans l'état opérationnel actif après que l'entrée de commande (13) a obtenu un signal de la part du dispositif d'actionnement (6).

4. Dispositif capteur selon la revendication 1, **caractérisé par** la présence d'un chien de garde avec lequel l'état opérationnel du transducteur ultrasonique (4) est surveillé cycliquement.

5. Dispositif capteur selon la revendication 1, **caractérisé par** la présence d'un bus externe avec lequel le transducteur ultrasonique (4) peut être amené dans l'état opérationnel actif.

6. Dispositif capteur selon la revendication 1, **caractérisé en ce que** les données de mesure acquises peuvent être transmises conjointement avec l'état énergétique du transducteur ultrasonique (4) à une commande (9) de niveau supérieur au moyen d'une interface à basse consommation (8).

7. Dispositif capteur selon la revendication 4, **caractérisé en ce que** l'unité de commande (15) est reliée au transducteur ultrasonique (4) par le biais d'une unité d'émission-réception (16), le transducteur ultrasonique (4) pouvant être amené dans l'état opérationnel actif par le biais de l'unité de commande (15).

8. Procédé pour amener un dispositif capteur (1) selon l'une des revendications 1 à 7, qui se trouve dans un état de repos, dans un état opérationnel actif, le dispositif capteur (1) effectuant plusieurs mesures à l'état opérationnel actif, comprenant les étapes suivantes:
a) une unité de surveillance d'énergie est utilisée pour surveiller si suffisamment d'énergie est présente dans le dispositif capteur (1) pour maintenir le dispositif capteur (1) dans un mode d'économie d'énergie ;
b) un dispositif d'actionnement (6), réalisé sous la forme d'un capteur de lumière, un capteur de mouvement, un contact électrique ou un appareil de mesure des vibrations, est stimulé par une condition de déclenchement pour un type de réservoir collecteur donné, la condition de déclenchement se rapportant à la température et/ou l'humidité de l'air ;
c) le dispositif d'actionnement (6) envoie un signal à une entrée de commande (13) du dispositif capteur (1) ;
d) une unité de commande (15) est activée dans le dispositif capteur (1) ;
e) l'unité de commande (15) stimule un transducteur ultrasonique (4) qui émet un signal ultrasonique pour une zone de balayage donnée, lequel est réfléchi dans un intérieur du réservoir collecteur (2), le signal réfléchi étant de nouveau reçu par le transducteur ultrasonique (4) ;
f) le signal est converti dans le transducteur ultrasonique (4) en un signal électrique et retransmis à l'unité de commande (15) ;
g) une valeur d'écart pour la plage de balayage est déterminée dans l'unité de commande (15) à partir du signal électrique ;
h) la valeur d'écart déterminée est envoyée à une commande (9) de niveau supérieur ;
i) les étapes e) à h) sont répétées pour chacune des plages de balayage à mesurer ;
j) la commande (9) de niveau supérieur calcule le niveau de remplissage du réservoir collecteur (2) à partir des valeurs d'écart déterminées pour les zones de balayage.
